# EUROPÄISCHE PATENTSCHRIFT

(11) **EP 1 759 987 B1**
(45) Veröffentlichungstag und Bekanntmachung des Hinweises auf die Patenterteilung: **30.03.2011**
(21) Anmeldenummer: 06017956.1
(22) Anmeldetag: 29.08.2006
(51) Int. Cl.: B63H 23/24, H02K 29/00

(54) **Elektrischer Bootsantrieb**
Electric boat drive
Propulseur électrique pour bateaux

(30) Priorität: 30.08.2005 EP 05018832
(43) Veröffentlichungstag der Anmeldung: 07.03.2007
(73) Patentinhaber: Torqeedo GmbH, 82319 Starnberg (DE)
(72) Erfinder: Kraft, Klaus, 89134 Blaustein (DE); Walk, Heinrich, 89604 Allmendingen (DE); Böbel, Friedrich, Dr., 82547 Eurasburg (DE)
(74) Vertreter: Gellner, Bernd

(56) Entgegenhaltungen:
- EP-A- 0 788 221
- EP-A- 0 867 361
- DE-U1- 20 121 672
- US-A- 4 362 512
- US-A- 4 774 428
- US-B1- 6 664 692
- HEINEMANN J: "ELEKTRISCHER MOTORPROPELLER - STAND DER ENTWICKLUNG UND ANWENDUNG. ELECTRIC-MOTORPROPELLER - STATE OF DEVELOPMENT AND APPLICATION" JAHRBUCH DER SCHIFFBAUTECHNISCHEN GESELLSCHAFT, BERLIN, DE, Bd. 86, 1. Januar 1992 (1992-01-01), Seiten 88-94, XP002043272 ISSN: 0374-1222
- PELLEGRINO G M ET AL: "Design of direct-drive, low-speed PM machines" CONFERENCE RECORD OF THE 2003 IEEE INDUSTRY APPLICATIONS CONFERENCE. 38TH. IAS ANNUAL MEETING . SALT LAKE CITY, UT, OCT. 12 - 16, 2003; [CONFERENCE RECORD OF THE IEEE INDUSTRY APPLICATIONS CONFERENCE. IAS ANNUAL MEETING], NEW YORK, NY : IEEE, US, Bd. 2, 12. Oktober 2003 (2003-10-12), Seiten 1421-1428, XP010676847 ISBN: 978-0-7803-7883-4
- KAUFHOLD MARTIN ET AL: "Permanenterregte Grossmaschinen: Potenziale in der Oberklasse" ELEKTROTECHNISCHE ZEITSCHRIFT - ETZ, VDE VERLAG GMBH, BERLIN, DE, Bd. 123, Nr. 20, 1. Januar 2002 (2002-01-01), Seiten 2-7, XP002364411 ISSN: 0948-7387
- CHAN C C: "A NOVEL HIGH POWER DENSITY PERMANENT MAGNET VARIABLE-SPEED MOTOR" IEEE TRANSACTIONS ON ENERGY CONVERSION, IEEE SERVICE CENTER, PISCATAWAY, NJ, US, Bd. 8, Nr. 2, 1. Juni 1993 (1993-06-01), Seiten 297-303, XP000384981 ISSN: 0885-8969
- MAGENS K: "PERMASYN - EIN PERMANENTERREGTER SYNCHRONMOTOR FUER DEN SCHIFFSBETRIEB. PERMASYN - A PERMANENT-FIELD, CONVERTER-FED MOTOR FOR PROPULSION SYSTEMS" JAHRBUCH DER SCHIFFBAUTECHNISCHEN GESELLSCHAFT, BERLIN, DE, Bd. 81, 1. Januar 1987 (1987-01-01), Seiten 221-227, XP002043270 ISSN: 0374-1222
- "PERMASYN Motors for Submarine Propulsion / SIEMENS; INDUSTRIAL SOLUTIONS AND SERVICES - YOUR SUCCESS IS OUR GOAL" MANUAL SIEMENS, XX, XX, 1. Januar 2001 (2001-01-01), Seiten 1-14, XP002364413

## Beschreibung

Die Erfindung betrifft einen Bootsantrieb mit einem permanentmagneterregten, elektronisch kommutierten Synchronmotor mit einem Stator und einem Rotor, wobei der Stator und der Rotor eine unterschiedliche Anzahl von Polen besitzen, mit einem Unterwasserteil, in dem der Synchronmotor untergebracht ist, mit einem Propeller, welcher sich außerhalb des Unterwasserteils befindet und mit einer Motorwelle zur Kraftübertragung von dem Synchronmotor zu dem Propeller.

Aufgrund strengerer Umweltschutzbestimmungen werden auf Seen und auch im küstennahen Bereich verstärkt Boote mit Elektroantrieben eingesetzt. Gegenüber Verbrennungsmotoren haben diese den Vorteil, geräuscharm zu sein und das Wasser nicht zu verschmutzen, was ansonsten insbesondere bei Zwei-Takt-Verbrennungsmotoren der Fall ist.

Die für den Betrieb von Elektromotoren notwendige elektrische Energie wird von Batterien zur Verfügung gestellt. Batterien sind allerdings vergleichsweise groß und schwer, so dass auf dem Boot nur eine begrenzte Anzahl Batterien untergebracht werden kann. Entsprechend wird die Reichweite eines elektrisch angetriebenen Bootes durch die Kapazität der Batterie begrenzt.

Bei Elektrobooten besteht daher die Notwendigkeit, einen Antrieb mit möglichst hohem Wirkungsgrad einzusetzen, um die begrenzte Kapazität der Batterien optimal auszunutzen. Üblicherweise umfasst der Bootsantrieb zumindest einen Motor und einen sich unter der Wasseroberfläche drehenden Propeller und Mittel zur Kraftübertragung vom Motor auf den Propeller.

Der Gesamtwirkungsgrad eines Bootsantriebs setzt sich zusammen aus dem Wirkungsgrad des Motors, dem der Kraftübertragung, der Kraftübersetzung und dem des Propellers. Der Wirkungsgrad eines Propellers hängt wesentlich von der Größe des Propellers ab. Aus energetischer Sicht ist es besonders günstig, einen möglichst großen, langsam drehenden Propeller einzusetzen. Der den Propeller antreibende Elektromotor sollte daher bei relativ niedrigen Drehzahlen ein möglichst großes Drehmoment aufbringen.

Zudem steigt der Schub eines Propellermotors quadratisch mit dem Durchmesser des Propellers. Sollen daher schwere Schiffe mittels eines Propellermotors geschoben werden, so sind ebenfalls große Propellerdurchmesser notwendig.

In der US 5,816,870 wird hierzu vorgeschlagen, einen überdimensionierten Elektromotor zu verwenden, der bei etwa 30 bis 40 % seiner Nennleistung betrieben wird. Auf diese Weise soll das notwendige hohe Drehmoment bei niedrigen Drehzahlen erreicht werden. Nachteilig an diesem Antrieb ist jedoch, dass die gewünschte Leistungscharakteristik, nämlich hohes Drehmoment bei kleiner Drehzahl, aufgrund der Überdimensionierung des Elektromotors durch ein hohes Gewicht erkauft wird.

Aus der US 6,664,692 B1 ist ein Elektromotor bekannt, bei dem der Stator und der Rotor eine unterschiedliche Anzahl von Polen besitzen. Die unterschiedliche Polzahl bewirkt eine elektrische Drehzahluntersetzung. Der Motor bietet sich daher insbesondere für solche Anwendungen an, bei denen eine geringe Drehzahl gewünscht ist. Der in der US 6,664,692 B1 beschriebene Elektromotor ist als Scheibenläufer ausgeführt, das heißt, die Achse des Magnetfelds ist parallel zur Drehachse des Rotors angeordnet. Dadurch lassen sich Geometrien realisieren, bei denen der Ort der elektromagnetischen Krafterzeugung relativ weit von der Drehachse entfernt liegt, wodurch größere Drehmomente erzielt werden können. Entsprechend haben Scheibenläufermotoren jedoch den Nachteil, dass sie einen relativ großen Durchmesser besitzen und damit beispielsweise für den Einbau in den Pylon eines Außenbordmotors nicht geeignet sind.

In der EP 0 867 361 A2 ist ein Schiffsantrieb mit Düsenpropeller beschrieben.

Aufgabe vorliegender Erfindung ist es, einen Elektroantrieb für Boote zur Verfügung zu stellen, der einen möglichst hohen Wirkungsgrad bei niedrigem Eigengewicht besitzt. Insbesondere soll der Elektroantrieb als Außenbordmotor verwendbar und in einen Pylon einbaubar sein.

Diese Aufgabe wird durch einen Bootsantrieb der eingangs genannten Art gelöst, der dadurch gekennzeichnet ist, dass das zwischen den Polen des Stators und den Polen des Rotors erzeugte Magnetfeld im Wesentlichen radial zu der Drehachse des Rotors gerichtet ist und wobei die Pole des Rotors weiter von der Drehachse des Rotors beabstandet sind als die Pole des Stators.

Erfindungsgemäß wird ein bürstenloser Synchronmotor eingesetzt. Die elektrische Energie wird von einer Batterie oder einem Akku zur Verfügung gestellt. Der Gleichstrom der Batterie wird mittels eines Drehzahlstellers elektronisch in einen Drei- oder Mehr-Phasen-Drehstrom umgewandelt, das heißt elektronisch kommutiert.

Bei dem erfindungsgemäßen Motor besitzen der Stator und der Rotor eine unterschiedliche Anzahl an magnetischen Polen. Die unterschiedliche Polzahl bewirkt eine elektrische Drehzahluntersetzung. Im Gegensatz zu üblichen Synchronmotoren, bei denen der Rotor die gleiche Drehzahl wie das im Stator erzeugte Drehfeld besitzt, dreht sich der erfindungsgemäße Motor langsamer.

Erfindungsgemäß ist der Elektromotor als Außenläufer ausgeführt. Dies bedeutet, dass der Stator im Zentrum angeordnet ist und sich der Rotor außen um den Stator dreht. Die Drehachse des Rotors befindet sich im Zentrum des Stators und fällt mit der Symmetrieachse des Stators zusammen. Die Pole des Rotors sind also weiter von der Drehachse des Rotors beabstandet als die Pole des Stators. Der Rotor kann ring- oder glockenförmig gestaltet sein.

Das zwischen den Polen des Stators und den Polen des Rotors erzeugte Magnetfeld ist im Wesentlichen radial zu der Drehachse des Rotors gerichtet. Die elektromagnetische Kraft wird in dem Spalt zwischen den innen liegenden Statorpolen und den außen auf dem ring- oder glockenförmigen Rotor liegenden Rotorpolen erzeugt, das heißt, weit von der Drehachse des Rotors entfernt, so dass sehr hohe Drehmomente erreicht werden.

Im Vergleich zu einem Innenläufer, bei dem sich der Rotor im Inneren des Stators dreht, hat der Außenläufer damit den Vorteil, dass aufgrund des größeren Abstandes der Permanentmagnete des Rotors von der Drehachse bei gleicher vom Statordrehfeld auf den Rotor ausgeübter Kraft ein höheres Drehmoment erzeugt wird.

Bei Außenläufer-Motoren herkömmlicher Bauart besteht die Gefahr, dass der Rotor und die daran befestigten Permanentmagnete den hohen Fliehkräften, die auf sie einwirken, nicht standhalten. Bei der erfindungsgemäßen Ausführung besteht diese Gefahr nicht, da die Fliehkräfte durch die elektrische Drehzahluntersetzung beträchtlich reduziert werden.

Die Erfindung stellt einen Bootsantrieb dar, der optimal an die Anforderungen, die an einen Außenbordbootsmotor gestellt werden, angepasst ist. Wie eingangs erwähnt, sollte der Bootsmotor bei niedrigen Drehzahlen ein möglichst hohes Drehmoment aufbringen. Die gewünschten niedrigen Drehzahlen werden durch die erfindungsgemäße Wahl unterschiedlicher Polzahlen für Stator und Rotor und die daraus resultierende elektrische Untersetzung erreicht. Gleichzeitig wird durch die Bauform als Außenläufer bei gegebener Maximalabmessung ein besonders hohes Drehmoment erzielt, da der Spalt zwischen den Stator- und den Rotorpolen weit von der Drehachse des Motors beabstandet ist. Andererseits kann der Motor in dem Pylon, das heißt in dem sich Unterwasser befindlichen Strömungskörper, untergebracht werden. Dies bringt zum einen den Vorteil, dass keine weiteren Umlenkungen zur Kraftübertragung zwischen der Motorwelle, d.h. der Rotordrehachse, und dem Propeller notwendig sind. Zum anderen wird der Motor bei einer Platzierung im Pylon durch das den Pylon umströmende Wasser im Betrieb gekühlt, so dass keine weiteren Maßnahmen zur Motorkühlung getroffen werden müssen.

In einer bevorzugten Ausführung weist der Stator des Synchronmotors eine geradzahlige Anzahl von Statorzähnen auf, von denen nur jeder zweite mit einer Wicklung versehen ist. Die einzelnen Wicklungen werden von dem von dem Drehzahlsteller bereitgestellten Drei- oder Mehr-Phasen-Strom durchflossen, wodurch ein magnetisches Drehfeld erzeugt wird. Vorzugsweise wird dabei an benachbarte Windungen Strom unterschiedlicher Phase angelegt.

Unter dem Begriff Statorzähne sollen alle Arten von den magnetischen Fluss leitenden Vorsprüngen, Nuten oder Ein- bzw. Ausbuchtungen des Stators verstanden werden, auf bzw. in die elektrischen Strom leitende Wicklungen gewickelt werden können. Die Statorzähne sind dabei im Wesentlichen auf einem Kreis angeordnet.

Der erfindungsgemäße Synchronmotor wird permanentmagneterregt, das heißt, der Rotor besitzt mehrere gleichmäßig um seinen Umfang verteilte Permanentmagnete. Das im Stator rotierende magnetische Drehfeld wirkt auf die magnetischen Pole des Rotors ein und versetzt diesen in eine Drehbewegung.

Im Stator entsteht ein magnetischer Fluss, der sich von einem bewickelten Statorzahn über einen Teil des Rotors zum benachbarten Statorzahn und über den Stator zurück zu dem bewickelten Statorzahn erstreckt. Auf diese Weise bildet jeder Statorzahn, und zwar sowohl ein bewickelter Statorzahn als auch ein unbewickelter Statorzahn, einen magnetischen Pol.

Erfindungsgemäß ist auf dem Stator und dem Rotor eine unterschiedliche Zahl von magnetischen Polen vorgesehen. Auf die obige Ausführungsform angewandt, bedeutet dies, dass die Anzahl der Statorzähne ungleich der Anzahl der auf dem Rotor angebrachten Permanentmagnete ist. Wie bereits erwähnt, wird so auf elektrische Art die Drehzahl des Synchronmotors reduziert.

Vorzugsweise unterscheiden sich die Anzahl der Polpaare von Rotor und Stator um ±1, das heißt, entweder ist die Anzahl der Polpaare des Rotors um eins größer als die des Stators oder umgekehrt. Beim Rotor ergibt sich die Anzahl der Polpaare unmittelbar durch Halbierung der Zahl der auf dem Rotor befestigten Permanentmagnete. Beim Stator sind in der oben beschriebenen Ausführung mit bewickelten und unbewickelten Statorzähnen nicht nur die bewickelten Statorzähne zu berücksichtigen. Auch über die unbewickelten Statorzähne erstreckt sich der magnetische Fluss, so dass auch diese, und damit alle Statorzähne, als magnetische Pole auftreten. Die Anzahl der Polpaare des Stators entspricht somit der Hälfte der Statorzähne.

Von Vorteil besitzt der Rotor 4 bis 8, besonders bevorzugt 5 bis 7 Polpaare. In einer besonders bevorzugten Ausführungsform weist der Stator 12 Statorzähne auf, von denen 6 Zähne bewickelt sind. Die Anzahl der Statorpolpaare beträgt damit ebenfalls 6. Man kann zeigen, dass sich bei 6 Statorpolpaaren und 5 Rotorpolpaaren eine Drehzahluntersetzung von 1 zu 5 einstellt.

Eine noch günstigere Drehzahluntersetzung von 1 zu 7 wird erzielt, wenn - bei einem Stator mit 6 Polpaaren - der Rotor mit 7 Polpaaren beziehungsweise 14 Permanentmagneten ausgerüstet wird. Der Rotor dreht sich in diesem Fall 7mal langsamer als das im Stator erzeugte magnetische Drehfeld.

Durch die große Polzahl von 4 bis 8, besonders bevorzugt 5 bis 7, wird unabhängig vom Drehwinkel stets eine hohe gegenseitige Überdeckung der magnetischen Pole von Rotor und Stator erreicht. Der Abstand zwischen den magnetischen Polen des Rotors und denen des Stators ist in jeder Winkelstellung relativ gering, wodurch umgekehrt die magnetische Anziehungskraft relativ groß ist. Eine hohe Anziehungskraft ist gleichbedeutend mit einem hohen Drehmoment.

Der erfindungsgemäße Antrieb erzielt so bei niedriger Drehzahl - aufgrund der elektrischen Drehzahluntersetzung - ein hohes Drehmoment und erfüllt damit genau die Anforderungen, die an einen optimalen elektrischen Bootsmotor gestellt werden. Mit dem Motor können daher große Propeller mit niedriger Drehzahl angetrieben werden. Wie eingangs ausgeführt, können dadurch besonders hohe Wirkungsgrade erreicht werden. Das heißt, das Verhältnis der Leistung, die tatsächlich für den Bootsvorschub genutzt wird, zu der von der Batterie zur Verfügung gestellten Leistung ist hoch. Dies erlaubt bei gegebener Batteriekapazität eine beträchtliche Steigerung der Reichweite im Vergleich zu Booten mit herkömmlichem Elektromotor. Ferner erzeugt der erfindungsgemäße Bootsantrieb einen hohen Schub, so dass auch mit sehr leichten und kleinen Motoren große und schwere Boote oder Schiffe angetrieben werden können.

Die elektrische Drehzahluntersetzung hat den weiteren Vorteil, dass die in den Lagern des Rotors auftretenden Reibungskräfte deutlich verringert sind, da die Reibungskräfte proportional zur Drehzahl steigen. Die Erfindung erlaubt daher den Einsatz handelsüblicher Lager. Auf teure Speziallager, wie beispielsweise Keramiklager, kann verzichtet werden.

Bevorzugt wird der erfindungsgemäße Bootsantrieb ohne zusätzliches Getriebe ausgeführt. Das heißt, die Drehzahl des Elektromotors wird einzig über die elektrische Drehzahluntersetzung reduziert. Ein Getriebe zur weiteren Drehzahlreduzierung ist nicht notwendig. Auf diese Weise wird zusätzliches Gewicht gespart und außerdem werden die mit einem Getriebe verbundenen Geräusche vermieden. Aber selbstverständlich kann der erfindungsgemäße Motor auch mit einem Getriebe versehen werden, falls dies erforderlich ist.

Von Vorteil wird ein sensorloser Drehzahlsteller verwendet. Es wird also auf einen speziellen Sensor verzichtet, um die aktuelle Rotorstellung festzustellen und an den Drehzahlsteller zu übermitteln.

Der erfindungsgemäße Motor wird vorzugsweise auf eine an der Motorwelle abgreifbare Leistung zwischen 100 W und 10 kW ausgelegt, besonders bevorzugt zwischen 100 W und 5000 W, ganz besonders bevorzugt zwischen 500 W und 4000 W.

Der Bootsmotor wird von Vorteil bei einer Betriebsspannung zwischen 12 V und 60 V betrieben. Die entsprechenden Ströme können in Abhängigkeit von der Motorenleistung durchaus mehr als 100 A betragen.

Das hohe Leistungsgewicht und das große mit dem erfindungsgemäßen Motor zu erreichende Drehmoment erlauben die Herstellung kompakter und leichter Motoren.

Bei einem Außenbordmotor umfasst der Bootsantrieb zumindest den Motor, den Propeller, eine Welle oder ähnliche Kraftübertragungsvorrichtung und einen Schaft, der den sich unter Wasser befindlichen Teil des Antriebs mit dem Boot beziehungsweise mit dem sich über Wasser befindlichen Teil verbindet. Von Vorteil ist die Energieversorgung, das heißt die Batterie oder ein Akku, ebenfalls in den Außenbordmotor integriert. Bei der erfindungsgemäßen Ausführung besitzt der gesamte Antrieb ein Gewicht von weniger als 15 kg, besonders bevorzugt weniger als 10 kg. Der Bootsantrieb ist damit von jedermann leicht bedien- und handhabbar.

Aus Gründen der Kraftübertragung und der Motorkühlung ist es besonders günstig, bei einem Außenbordantrieb den Motor im Pylon unterzubringen. Dabei ist aber zu beachten, dass der Pylon aus strömungstechnischen Gründen möglichst schmal, das heißt mit relativ geringer radialer Ausdehnung, ausgeführt sein sollte. Andererseits ist das von einem Elektromotor erzeugte Drehmoment proportional zum Abstand des Spaltes zwischen den Statorpolen und den Rotorpolen von der Drehachse des Rotors. Eine Motorbauform mit größeren radialen Abmessungen erlaubt so prinzipiell ein größeres Drehmoment. Die erfindungsgemäße Ausführung als Außenläufer stellt insoweit einen optimalen Kompromiss zwischen diesen beiden entgegengesetzten Anforderungen dar.

Die Leistung des Außenläufers kann dagegen über dessen Länge in axialer Richtung, das heißt in Richtung der Rotordrehachse bzw. Motorwelle, variiert werden. In erster Näherung steigt die Leistung des Motors bei ansonsten unveränderter Bauweise proportional mit dessen Länge. Die in Strömungsrichtung relativ lang gestreckte Bauform üblicher Pylone beschränkt den Einbau leistungsstärkerer Motore der erfindungsgemäßen Bauart in der Regel nicht.

Wie bereits ausgeführt, erlaubt der erfindungsgemäße Elektromotor den Einsatz von relativ großen Propellern. Vorzugsweise werden Propeller mit einem Durchmesser von mehr als 20 cm Durchmesser, besonders bevorzugt von mehr als 30 cm Durchmesser verwendet.

Die Erfindung weist zahlreiche Vorteile gegenüber den bekannten elektrischen Bootsantrieben auf: Der erfindungsgemäße Motor kann äußerst kompakt und platzsparend gebaut werden. Zudem besitzt der Motor ein hohes Leistungsgewicht, das heißt die pro kg Motorengewicht erbrachte Leistung ist hoch. Insbesondere bei Verwendung großer Polzahlen von 10 und mehr besitzt der Motor ein hohes Drehmoment Die Kombination hohes Drehmomentgewicht in Nm pro kg und hohes Leistungsgewicht in W pro kg ermöglicht die Herstellung leistungsfähiger, aber dennoch kleiner, leichter und kompakter Antriebe.

Durch die elektrische Drehzahluntersetzung liefert der erfindungsgemäße Motor ein hohes Drehmoment und eine hohe Leistung bei kleinen Drehzahlen. Teilweise ist es sogar möglich, auf ein Getriebe zur weiteren Drehzahlreduzierung zu verzichten. Die Erfindung ermöglicht damit den Einsatz großer, langsam drehender Propeller, wodurch der Gesamtwirkungsgrad des Bootsantriebs wesentlich erhöht wird und große Schubkräfte erzielt werden können.

Ein erfindungsgemäßer Bootsantrieb umfasst beispielsweise einen 2000 W Synchronmotor, der mit 24 V Batteriespannung versorgt wird. Der Motor wird bei einer Drehzahl von 6000 Umin⁻¹ betrieben. Ein 1 zu 7-Getriebe sorgt gegebenenfalls für eine weitere Drehzahluntersetzung. Der Propellerdurchmesser beträgt 30 cm. Ein solcher Bootsantrieb erreicht einen Gesamtwirkungsgrad von 50 %. Das heißt, 50 % der von der Batterie zur Verfügung gestellten Leistung wird in den Vortrieb des Bootes, das heißt kinetische Leistung (Kraft mal Geschwindigkeit) umgesetzt. Das Gewicht dieses Antriebs beträgt 15 kg.

Bei Booten unterscheidet man zwischen Verdrängerbooten, Halbgleitern und Gleitbooten. Der erfindungsgemäße Bootsantrieb eignet sich insbesondere zum Antrieb von Verdrängerbooten. Insbesondere bei Verdrängerbooten mit einer Grenzgeschwindigkeit zwischen 8 und 14 km/h kommen die positiven Eigenschaften des erfindungsgemäßen Antriebs, nämlich hohes Leistungsgewicht und hohes Drehmomentgewicht, zum Tragen.

Bevorzugt wird die Erfindung bei Segelbooten, Elektromotorbooten, Angler- und Ruderbooten, Kanadiern oder Schlauchbooten eingesetzt. Der erfindungsgemäße Bootsantrieb eignet sich insbesondere zum Bewegen von Booten mit einer Länge zwischen 6 und 14 m und einem Verdrängungsgewicht bis 2 t.

Die Erfindung sowie weitere Einzelheiten der Erfindung werden im Folgenden anhand von in den Zeichnungen dargestellten Ausführungsbeispielen näher erläutert. Hierbei zeigen:
- Figur 1: einen erfindungsgemäßen Bootsantrieb,
- Figur 2: einen schematischen Querschnitt durch einen erfindungsgemäßen Synchronmotor,
- Figur: 3 den Aufbau eines Scheibenläufermotors nach dem Stand der Technik,
- Figur 4: zum Vergleich den Aufbau eines erfindungsgemäßen Außenläufers und
- Figur 5: einen erfindungsgemäßen Motor mit größerer Leistuing, aber gleichem Drehmoment wie der in Figur 4 gezeigte Motor.

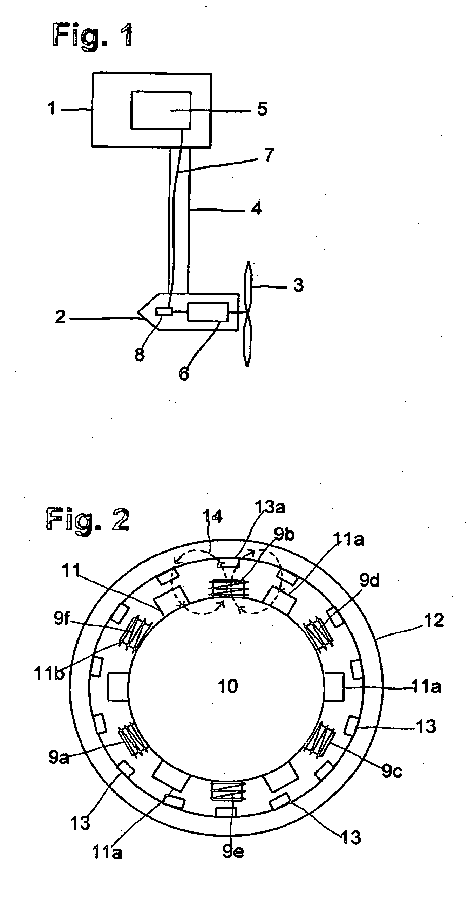

Der in Figur 1 dargestellte Außenbordmotor besteht im Wesentlichen aus einem Oberteil 1, einem Unterwasserteil 2, welches mit einem Propeller 3 versehen ist, und einem Schaft 4, der das Oberteil 1 mit dem Unterwasserteil 2, auch als Pylon bezeichnet, verbindet. Der Propeller 3 hat einen Durchmesser von 30 cm. Das Oberteil 1 beinhaltet einen Batteriesatz 5 als Stromversorgung. Der eigentliche Elektromotor 6 befindet sich im Unterwasserteil 2 und treibt den Propeller 3 über eine Welle an. Der Elektromotor 6 ist an den Batteriesatz 5 mittels eines elektrisch leitenden Kabels 7 angeschlossen, welches im Inneren des Schaftes 4 verläuft. Um die beim Betrieb des Elektromotors 6 hohen Strömen leiten zu können, wird ein elektrisches Kabel 7 mit einem Querschnitt von 10 mm² eingesetzt.

Figur 2 zeigt einen Querschnitt durch den Elektromotor 6. Der Elektromotor 6 ist als Synchronmotor ausgeführt, der von einem Drehzahlsteller 8 angesteuert wird. Über den Drehzahlsteller 8 wird der von den Batterien 5 gelieferte Strom elektronisch kommutiert und ein Drei-Phasen-Drehstrom erzeugt.

Der Stator 10 des Synchronmotors 6 besitzt insgesamt 12 Statorzähne 11a, 11b, von denen 6 Statorzähne 11b mit Wicklungen 9a, 9b, 9c, 9d, 9e, 9f versehen sind. Der Drei-Phasendrehstrom wird durch die Wicklungen 9a, 9b, 9c, 9d, 9e, 9f des Stators 10 geleitet und ruft auf diese Weise in dem Stator ein magnetisches Drehfeld hervor.

Der Rotor 12 ist glockenförmig ausgeführt und ist um den Stator 10 außen herum drehbar gelagert, das heißt der Motor 6 ist ein Außenläufermotor. Über den inneren Umfang des Rotors 12 des Synchronmotors 6 sind gleichmäßig 14 Permanentmagnete 13 verteilt. Im Betrieb wirkt das magnetische Drehfeld auf die Permanentmagnete 13 des Rotors 12 ein und versetzt den Rotor 12 in eine Drehbewegung.

Anhand der Wicklung 9b soll vereinfacht erläutert werden, wie die magnetischen Feldlinien im Synchronmotor 6 verlaufen. Der in der Wicklung 9b hervorgerufene, magnetische Fluss 14 fließt über den angrenzenden Permanentmagneten 13a auf den Rotor 12 und weiter über die benachbarten, nicht bewickelten Statorzähne 11a zurück. Auf diese Weise werden auch die unbewickelten Statorzähne 11a vom magnetischen Fluss durchzogen und wirken damit ebenfalls als magnetische Pole.

Bei der gezeigten Ausführungsform des Motors 6 besitzt der Stator 10 12 magnetische Pole oder entsprechend 6 Polpaare. Auf dem Rotor 12 sind 14 Permanentmagnete 13 aufgebracht, die demgemäß 7 magnetische Polpaare bilden. Die Anzahl der Polpaare des Rotors 12 übersteigt die des Stators 10 um +1. Beim Anlegen eines Drei-Phasen-Drehstroms an den Stator 10 wird der Rotor 12 in Rotation versetzt. Der Rotor 12 folgt aber nicht der Frequenz des Drehfelds, sondern dreht sich bei der gewählten Ausführung mit 7 Rotorpolpaaren um einen Faktor 7 langsamer als das magnetische Drehfeld. Der Synchronmotor 6 besitzt also eine elektrische Drehzahluntersetzung von 1 zu 7.

Unabhängig von der Winkelstellung des Rotors 12 befinden sich immer mehrere Permanentmagnete 13 in unmittelbarer Nähe der Statorpole 11a, 11b. Die gegenseitige Überdeckung der magnetischen Pole 13, 11a, 11b von Rotor 12 und Stator 10 ist immer hoch, so dass bei jeder Winkelstellung des Rotors 12 eine hohe Anziehungskraft zwischen den magnetischen Polen 13, 11a,11b des Rotors 12 und des Stators 10 auftritt. Dementsprechend hat der Synchronmotor 6 ein großes Drehmoment.

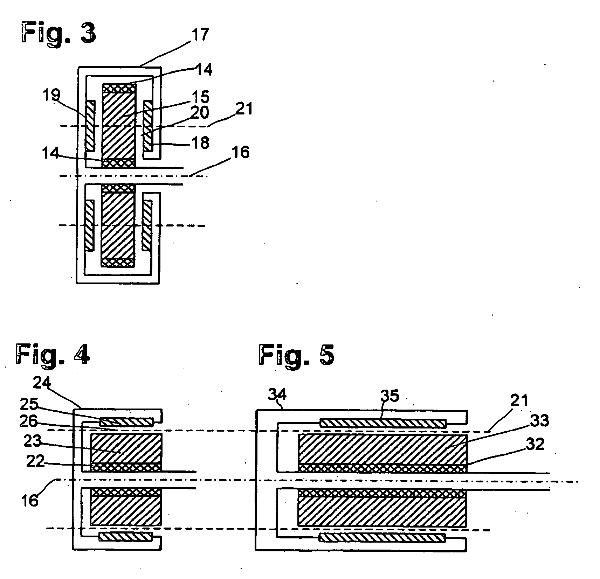

Anhand der Figuren 3 bis 5 soll im Folgenden erläutert werden, warum der erfindungsgemäße Bootsantrieb besonders günstig im Pylon oder Unterwasserteil 2 untergebracht werden kann.

Figur 3 zeigt einen Scheibenläufermotor, wie er beispielsweise aus der US 6,664,692 B1 bekannt ist. Auf einem scheibenförmigen Stator 14 sind mehrere Statorspulen 15 kreisförmig angeordnet. Die Achsen der Statorspulen 15 verlaufen parallel zur Welle 16 des Scheibenläufermotors. An der Welle 16 ist der Rotor 17 befestigt, welcher zwei ebenfalls kreisförmige Anordnungen von Permanentmagneten 18, 19 aufweist. Bei entsprechender Stellung des Rotors 17 befinden sich zwei der Permanentmagnete 18, 19 genau vor und hinter einer der Statorspulen 15. Das Magnetfeld zwischen den Satorspulen 15 und den Permanentmagneten 18, 19 des Rotors 17 verläuft daher im Wesentlichen parallel zur Drehachse 16 des Motors.

Das von dem Motor erzeugte Drehmoment ist in etwa proportional zu dem mittleren Abstand der Spalte 20 zwischen den Statorspulen 15 und den Permanentmagneten 18, 19 von der Drehachse 16. In Figur 3 ist die Lage des mittleren Spaltabstandes durch eine gestrichelte Linie angedeutet.

Figur 4 zeigt zum Vergleich die erfindungsgemäße Bauweise als Außenläufer. Der Stator 22 trägt in diesem Fall ebenfalls kreisförmig angeordnete Statorspulen 23, deren Achse jedoch radial nach außen gerichtet ist. Der Rotor 24 ist glockenförmig ausgeführt und umgreift die Statorspulen 23. Die Innenseite der Rotorglocke 24 ist mit Permanentmagneten 25 versehen. Der Magnetfluss verläuft bei dieser Bauweise radial, das heißt senkrecht zur Drehachse 16.

Das erzeugte Drehmoment ist wiederum proportional zum radialen Abstand der Spalte 26 von der Drehachse 16. Es ist deutlich zu erkennen, dass die Spalte 26 zwischen den Statorspulen 23 und den Permanentmagneten 25 in radialer Richtung relativ weit außen liegen, wodurch bei kompakter Bauweise ein großes Drehmoment erreicht wird.

Schließlich ist in Figur 5 ein erfindungsgemäßer Motor dargestellt, der bei gleichem Drehmoment wie der Motor gemäß Figur 4 eine größere Leistung aufbringt. Stator 32, Statorspulen 33, Rotor 34 und die Permanentmagnete 35 unterscheiden sich von der Ausführung nach Figur 4 im Wesentlichen darin, dass sie in Längsrichtung, das heißt in axialer Richtung, größer sind, wodurch die Motorleistung erhöht wird. Die radiale Ausdehnung und das Drehmoment der beiden in den Figuren 4 und 5 gezeigten Motore ist dagegen gleich.

## Patentansprüche

1. Bootsantrieb mit einem permanentmagneterregten, elektronisch kommutierten Synchronmotor (6) mit einem Stator (10) und einem Rotor (12), wobei der Stator (10) und der Rotor (12) eine unterschiedliche Anzahl von Polen (11a, 11b, 13) besitzen, mit einem Unterwasserteil (2), in dem der Synchronmotor (6) untergebracht ist, mit einem Propeller (3), welcher sich außerhalb des Unterwasserteils (2) befindet und mit einer Motorwelle (16) zur Kraftübertragung von dem Synchronmotor (6) zu dem Propeller (3), **dadurch gekennzeichnet, dass** das zwischen den Polen (11a, 11 b) des Stators (10) und den Polen (13) des Rotors (12) erzeugte Magnetfeld im Wesentlichen radial zu der Drehachse des Rotors (12) gerichtet ist und wobei die Pole (13) des Rotors (12) weiter von der Drehachse des Rotors (12) beabstandet sind als die Pole (11a,11b) des Stators (10).

2. Bootsantrieb nach Anspruch 1, **dadurch gekennzeichnet, dass** der Stator (10) Statorzähne (11a, 11b) für Statorwicklungen (9a, 9b, 9c, 9d, 9e, 9f) aufweist, wobei nur die Hälfte (11b) der Statorzähne (11a,11b) mit einer Wicklung (9a, 9b, 9c, 9d, 9e, 9f) versehen sind.

3. Bootsantrieb nach einem der Ansprüche 1 oder 2, **dadurch gekennzeichnet, dass** sich die Anzahl der Polpaare des Rotors (12) und die Anzahl der Polpaare des Stators (10) um +/- 1 unterscheiden.

4. Bootsantrieb nach einem der Ansprüche 1 bis 3, **dadurch gekennzeichnet, dass** der Rotor (12) 4 bis 8, bevorzugt 5 bis 7 Polpaare besitzt.

5. Bootsantrieb nach einem der Ansprüche 1 bis 4, **dadurch gekennzeichnet, dass** ein sensorloser Drehzahlsteller (8) vorgesehen ist.

6. Bootsantrieb nach einem der Ansprüche 1 bis 5, **dadurch gekennzeichnet, dass** ein Propeller (3) mit einem Durchmesser von mehr als 20 cm, bevorzugt mehr als 30 cm vorgesehen ist.

7. Bootsantrieb nach einem der Ansprüche 1 bis 6, **dadurch gekennzeichnet, dass** der Synchronmotor (6) eine Leistung zwischen 100 W und 10 kW, bevorzugt zwischen 500 W und 5000 W erbringt.

8. Verwendung eines Bootsantriebs nach einem der Ansprüche 1 bis 7 für ein Verdrängerboot.

## Claims

1. Boat drive having an electronically commutated synchronous motor (6) with permanent magnet excitation, having a stator (10) and a rotor (12), wherein the stator (10) and the rotor (12) have a different number of poles (11a, 11b, 13), having an underwater part (2) in which the synchronous motor (6) is accommodated, having a propeller (3) which is located outside the underwater part (2), and having a motor shaft (16) for transmitting power from the synchronous motor (6) to the propeller (3), **characterized in that** the magnetic field which is produced between the poles (11a, 11b) on the stator (10) and the poles (13) on the rotor (12) is directed substantially radially with respect to the rotation axis of the rotor (12), and wherein the poles (13) of the rotor (12) are further away from the rotation axis of the rotor (12) than the poles (11a, 11b) of the stator (10).

2. Boat drive according to Claim 1, **characterized in that** the stator (10) has stator teeth (11a, 11b) for stator windings (9a, 9b, 9c, 9d, 9e, 9f) wherein only half (11b) of the stator teeth (11a, 11b) are provided with a winding (9a, 9b, 9c, 9d, 9e, 9f).

3. Boat drive according to one of Claims 1 or 2, **characterized in that** the member of pole pairs of the rotor (12) and the number of pole pairs of the stator (10) differ by +/-1.

4. Boat drive according to one of Claims 1 to 3, **characterized in that** the rotor (12) has 4 to 8, preferably 5 to 7, pole pairs.

5. Boat drive according to one of Claims 1 to 4, **characterized in that** a rotation-speed controller (8) without sensors is provided.

6. Boat drive according to one of Claims 1 to 5, **characterized in that** a propeller (3) having a diameter of more than 20 cm, preferably more than 30 cm, is provided.

7. Boat drive according to one of Claims 1 to 6, **characterized in that** the synchronous motor (6) provides a power of between 100 W and 10 kW, preferably between 500 W and 5000 W.

8. Use of a boat drive according to one of Claims 1 to 7 for a displacement boat.

## Revendications

1. Propulseur pour bateau avec un moteur synchrone (6) excité par aimant permanent et commuté électroniquement, avec un stator (10) et un rotor (12), le stator (10) et le rotor (12) possédant un nombre différent de pôles (11a, 11b, 13), avec une partie immergée (2), dans laquelle le moteur synchrone (6) est placé, avec une hélice (3) se trouvant à l'extérieur de la partie immergée (2) et dotée d'un arbre de moteur (16), de façon à transmettre une force du moteur synchrone (6) à l'hélice (3), **caractérisé en ce que** le champ magnétique généré entre les pôles (11a, 11b) du stator (10) et les pôles (13) du rotor (12) sont pour l'essentiel orientés radialement par rapport à l'axe de rotation du rotor (12) et les pôles (13) du rotor (12) sont plus écartés de l'axe de rotation du rotor (12) que les pôles (11a, 11b) du stator (10).

2. Propulseur pour bateau selon la revendication 1, **caractérisé en ce que** le stator (10) est doté de dents de stator (11a, 11b) pour les bobines de stator (9a, 9b, 9c, 9d, 9e, 9f), seule la moitié (11b) des dents de stator (11a, 11b) étant dotée d'une bobine (9a, 9b, 9c, 9d, 9e, 9f).

3. Propulseur pour bateau selon l'une quelconque des revendications 1 ou 2, **caractérisé en ce que** le nombre de paires de pôles du rotor (12) et le nombre de paires de pôles du stator (10) varie de +/- 1.

4. Propulseur pour bateau selon l'une quelconque des revendications 1 à 3, **caractérisé en ce que** le rotor (12) possède 4 à 8, de préférence 5 à 7, paires de pôles.

5. Propulseur pour bateau selon l'une quelconque des revendications 1 à 4, **caractérisé en ce qu'**un régulateur de tours (8) sans capteur est prévu.

6. Propulseur pour bateau selon l'une quelconque des revendications 1 à 5, **caractérisé en ce qu'**une hélice (3) de diamètre de plus de 20 cm, de préférence de plus de 30 cm, est prévue.

7. Propulseur pour bateau selon l'une quelconque des revendications 1 à 6, **caractérisé en ce que** le moteur synchrone (6) fournit une puissance comprise entre 100 W et 10 kW, de préférence entre 500 W et 5000 W.

8. Application d'un propulseur pour bateau selon l'une quelconque des revendications 1 à 7 pour un bateau de déplacement.
